# EUROPEAN PATENT SPECIFICATION

(11) **EP 1 138 562 B1**
(45) Date of publication and mention of the grant of the patent: **15.11.2006**
(21) Application number: 01302287.6
(22) Date of filing: 13.03.2001
(51) Int. Cl.: B60R 25/02

(54) **Steering lock apparatus**
Lenkschloss
Verrou de direction

(30) Priority: 29.03.2000 JP 2000091556
(43) Date of publication of application: 04.10.2001
(73) Proprietor: NISSAN MOTOR COMPANY, LIMITED, Yokohama-shi, Kanagawa 221-0023 (JP)
(72) Inventor: Ueda, Toshiyuki, Kanagawa-ken (JP); Watanuki, Yoshio, Kanagawa-ken (JP); Maeda, Shigeho, Aikou-gun, Kanagawa-ken (JP)
(74) Representative: Godwin, Edgar James

(56) References cited:
- EP-A- 0 094 568
- FR-A- 2 263 133
- GB-A- 141 237
- GB-A- 795 833

## Description

The present invention relates to lock apparatus, and more particularly to steering lock apparatus which controls rotation of a steering shaft of a vehicle.

Japanese Patent Application Laid-Open Publication Nos. 9-228706 and 11-310104 disclose steering lock apparatus having at least a function of locking and unlocking steering apparatus of a vehicle with respect to a steering shaft and a function of starting and stopping an engine.

The steering lock apparatus mentioned above is constituted by a hollow casing supported by a steering shaft, a key cylinder received within the casing and capable of being rotated between a locking position and an unlocking position by a right key, a locking rod received within the casing and capable of moving to a locking position at which the locking rod is engaged with the steering shaft and an unlocking position at which the engagement is canceled, and an ignition switch capable of controlling the engine start and the engine stop in accordance with the rotation of the key cylinder.

In more detail, the casing mentioned above is structured such that a hole perpendicular to a direction in which the key cylinder is arranged is formed, the locking rod is arranged within the casing together with the necessary parts from one side of the hole, thereafter, a spring for always urging the locking rod from another side of the hole so as to protrude it is received, and another side of the hole of the casing is closed by a cap.

In the structure mentioned above, when taking out the key suitable to the steering lock apparatus from the key cylinder, the ignition switch becomes in an off-state, and the locking rod becomes in a locking state engaging with the steering shaft. In the locking state mentioned above, the steering shaft can not be rotated.

Accordingly, in the locking state mentioned above, if it was possible to start the engine without operating the suitable key, it is not possible to steer the wheels connected to the steering shaft, so that it is useful for burglarproofing the vehicle.

In this case, when inserting the key suitable to the steering lock apparatus into the key cylinder and rotating the key, the locking rod is buried within the casing, the engagement with the steering shaft is canceled (the unlocking state), and the steering shaft can be rotated.

However, in the structure mentioned above, in order to prevent the locking rod itself from being unfairly taken out from the steering shaft, it can be considered that a non-magnetic locking rod is employed for resisting a strong magnet. Apparently, such a material causes an increase of cost.

It would be desirable to be able to provide steering lock apparatus having an inexpensive cost of production and a high burglarproof characteristic.

EP-A-0094 568 discloses steering lock apparatus comprising: a hollow casing; a key cylinder received within the casing; an ignition switch operatively connected to the key cylinder; a locking rod operatively connected to the key cylinder, the locking rod having a base portion received within the casing and being movable to a locking position in which an engaging portion of the locking rod protrudes from the casing so as to be engageable with a steering shaft and an unlocking position in which the engaging portion is withdrawn for disengagement from the steering shaft; and a cap closing an opening portion of the casing, the opening portion facing the base portion of the locking rod. The materials of the casing, the locking rod, and the cap are not specified.

FR-A-2 263 133 discloses steering lock apparatus in which a locking bolt made of steel runs in a guide made of steel sheet in a body made of plastic, zamak, or aluminium.

The problem to be solved by the present invention is that of preventing the locking rod from being withdrawn from the steering shaft by a magnet.

The present invention provides steering lock apparatus as set forth in claim 1.

In the accompanying drawings:
Fig. 1 is a side elevational view showing steering lock apparatus in accordance with an embodiment of the present invention;
Fig. 2 is a top plan view of the apparatus;
Fig. 3 is a bottom plan view showing a portion above a position along a line SA-SA in Fig. 1;
Fig. 4 is an end view as seen from arrow B in Fig. 1;
Fig. 5 is a cross-sectional view along line SC-SC in Fig. 2;
Fig. 6 is a cross-sectional view along line SD-SD in Fig. 3;
Fig. 7 is a cross-sectional view along line SE-SE in Fig. 5; and
Fig. 8 is a cross-sectional view similar to Fig. 5, but corresponding to a state in which a locking rod protrudes.

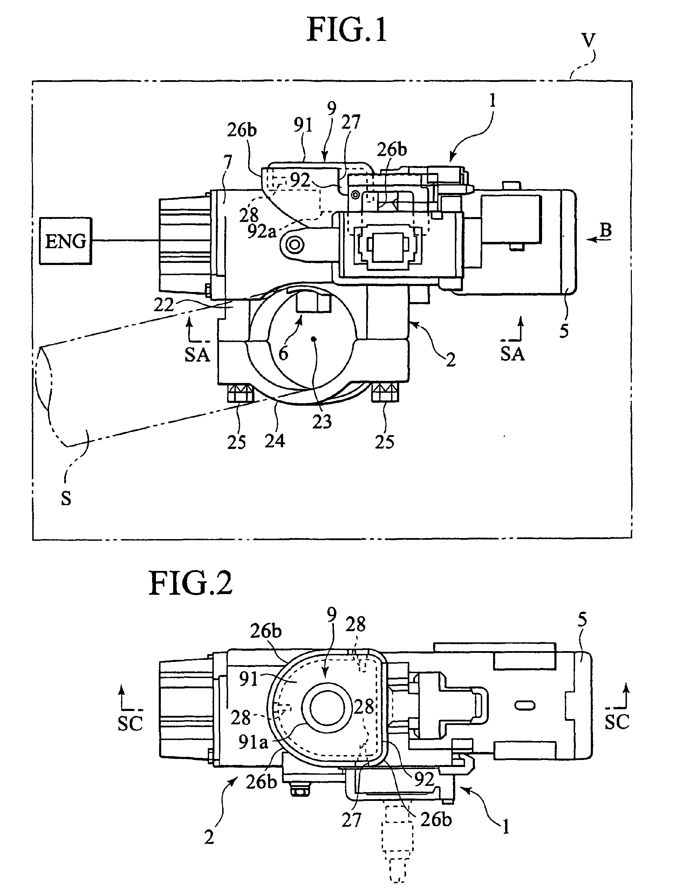

A description will be given below of steering lock apparatus in accordance with an embodiment of the present invention with reference to Figs. 1 to 8.

The steering lock apparatus 1, mounted on a vehicle V, has a casing 2, a key cylinder 3, a housing case 4, a position cap 5, a locking rod 6, an ignition switch 7, and a rotator 8.

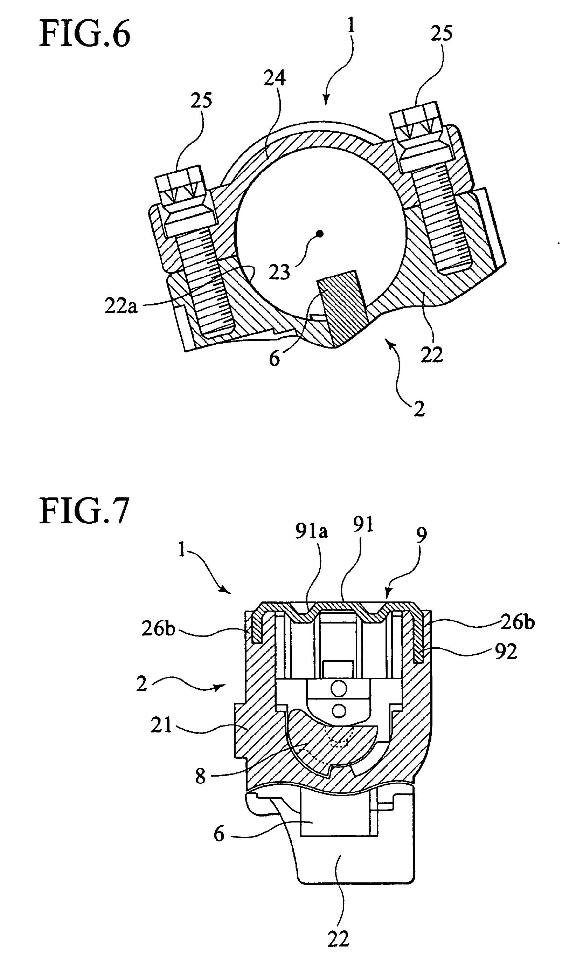

The casing 2 is structured such that a hollow cylindrical main body 21 and a mounting portion 22 formed in a part of the main body 21 are integrally formed by a zinc die cast. A semicircular recess portion 22a having a radius of 19.2 mm is formed in the mounting portion 22 from the axis 23 of a steering shaft S (illustration of the steering shaft S is omitted except in Fig. 1), as shown in Fig. 6, and is supported to the steering shaft by a fastening device 25 such as a bolt, a nut or the like, together with a semicircular fixer frame 24 having a radius of 19.2 mm from the axis 23 of the steering shaft in the same manner.

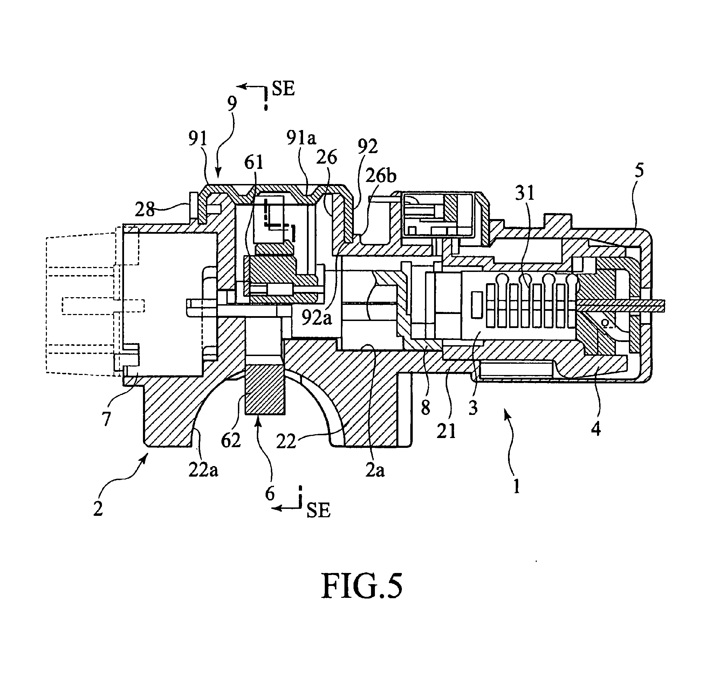

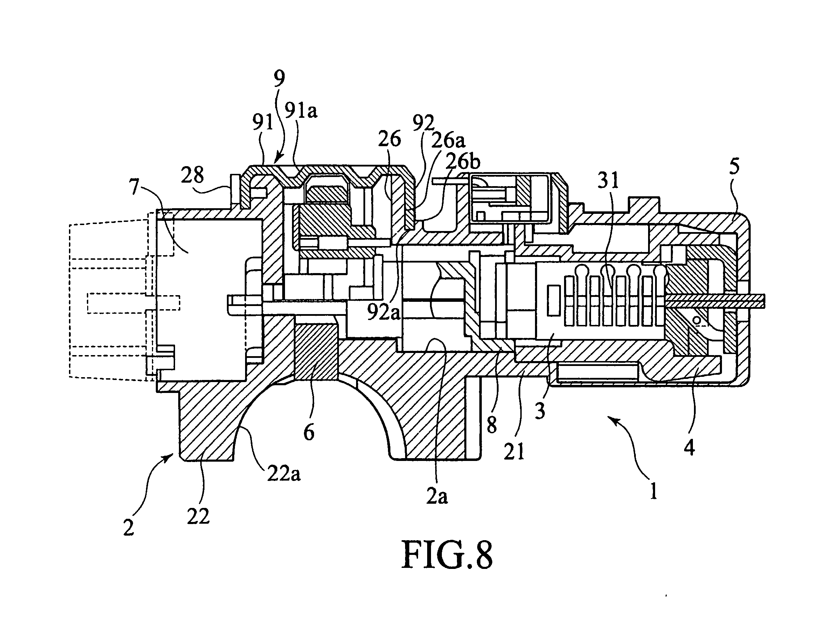

The key cylinder 3 can rotate from the locking portion to the unlocking position, as shown in Figs. 5 and 8, by inserting a suitable key (not shown) into the housing case 4 received within a hollow portion 2a of the casing 2, whereby a plurality of tumblers 31 engaged with the housing case 4 are retracted and released.

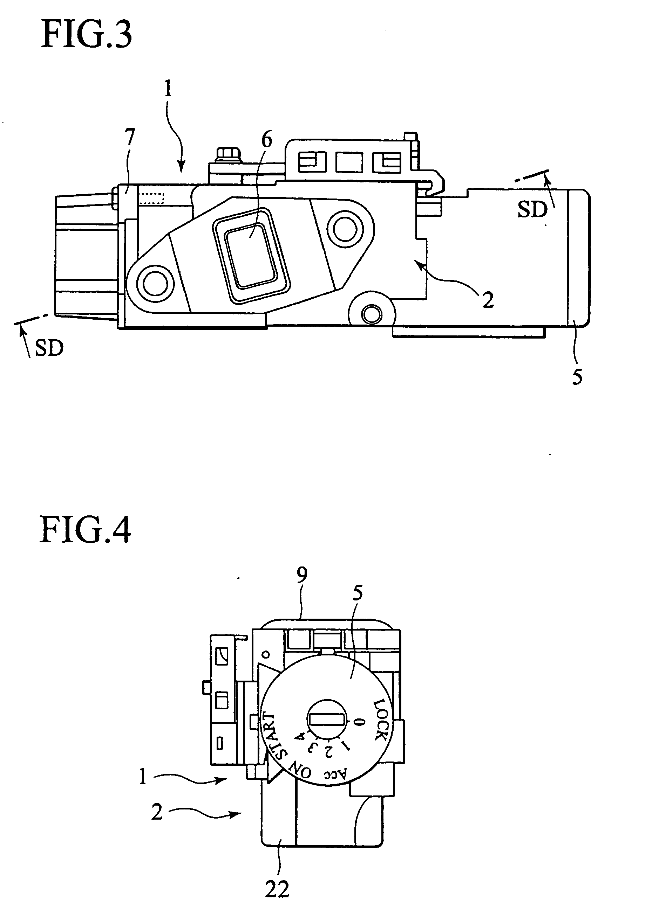

The position cap 5 is held on a front end of the housing case 4, and signs are formed so as to indicate that the key cylinder 3 respectively rotates to a lock position (LOCK), an accessory position (Acc), an on position (ON), and a start position (START), as shown in Fig. 4.

The locking rod 6 is structured, as shown in Figs. 5 and 8, such that a base portion 61 received within the casing 2 and an engaging portion 62 - which can move to a locking position (Fig. 5) at which the engaging portion 62 protrudes from the casing 2 and is engaged with the steering shaft and an unlocking position (Fig. 8) at which the engaging portion 62 is disengaged and immersed into the casing 2 - are integrally formed by an iron material corresponding to a magnetic body.

The ignition switch 7 is structured such as to control start and stop of an engine ENG in accordance with rotation of the key cylinder 3.

The locking rod 6 is arranged in the casing 2 in a direction perpendicular to the direction in which the key cylinder 3 or the like is arranged, and an opening 26 is formed in the casing 2 at a position facing a base portion 61 of the locking rod 6. A cap 9 is supported to the opening 26 so as to close the opening 26.

The cap 9 is formed by a main body portion 91 constituted by an iron flat plate constituting a magnetic body, particularly a ferromagnetic body, and a vertical wall-shaped peripheral edge portion 92 covering the peripheral edge 26a of the opening 26 in the casing 3. An endless uneven bead 91a is formed in a center portion of the main body portion 91.

A cover portion 26b covering a free end 92a of the peripheral edge portion 92 in the cap 9 is formed adjacent the peripheral edge 26a of the opening 26 in the casing 2.

In the casing 2, a notch portion 27 is formed in the cover portion 26b at a position easily brought into contact with the cap 9 and a screw 28 constituting a fixing portion is employed in correspondence therewith, whereby the peripheral edge portion 92 of the cap 9 is supported by the screw 28.

In the structure mentioned above, if a strong magnetic is arranged in a side of the base portion 61 of the locking rod 6, a magnetic field generated by the magnet is formed not only in a direction of the main body portion 91 of the cap 9 but also in a direction of the free end 92a of the peripheral edge portion 92 in a dispersing manner. That is, since the magnetic field generated by the magnet is formed along the main body portion 91 of the cap 9 and the free end 92a of the peripheral edge portion 92, even when it is intended to take out the engaging portion 62 of the locking rod 6 from the steering shaft due to a magnetic force of the magnet arranged in this manner, a vertical magnetic force for moving the locking rod 6 is weakened and the engagement between the steering shaft and the locking rod 6 is kept.

Further, when the casing 2 is mounted on the vehicle, the cap 9 is hard to be contacted and the peripheral edge portion 92 of the cap 9 is supported by the screw 28 in the cover portion 26b at a position easily contacted with the cap 9 in the casing 2 itself.

As mentioned above, in accordance with the present embodiment, since the cap 9 is made of an iron plate, as well as the cost of production being significantly inexpensive, the magnetic field generated by the magnet is formed in such a manner as to be dispersed by the main body portion 91 of the cap 9 and the free end 92a of the peripheral edge portion 92 even if it is tried to take out the engaging portion 62 of the locking rod 6 from the steering shaft by arranging the strong magnet in a side of the base portion 61 of the locking rod 6. Accordingly, it is possible to weaken the vertical magnetic force for moving the locking rod 6, the engagement of the locking rod 6 is kept and a high burglarproof characteristic can be secured.

Further, since the cover portion 26b at the position easily contacted with the cap 9 in the casing 2 itself and the peripheral edge portion 92 of the cap 9 are supported by using the screw 28, and the free end 92a of the peripheral edge portion 92 in the cap 9 is covered by the cover portion 26b, it is impossible to directly attack by the free end 92a and a burglarproof characteristic can be further improved.

Further, since the endless uneven bead 91a and the peripheral edge portion 92 are formed in the cap 9, its strength is significantly improved, so that a lot of time is required for breaking the cap 9 even if it is intended to break the cap 9. Accordingly, it is possible to significantly improve a burglarproof characteristic in this view.

Further, if the urging member for always urging the engaging portion 62 of the locking rod 6 in a protruding direction is formed in a coil shape, the uneven bead 91a is fitted to the end portion of the coil-shaped urging member, so that the position of the coil-shaped urging member can be easily and securely determined.

Further, since the screw 28 is arranged at the position easily contacted in the casing 2 itself, the cap 9 can be easily mounted to the casing 2. Further, since it is arranged at the position hard to be contacted with the screw 28 at a time of being mounted on the vehicle, a burglarproof characteristic can be significantly improved.

Incidentally in this case, in accordance with the present embodiment, the cap 9 is made of the iron plate; however, it is a matter of course that the same effect can be obtained by employing another ferromagnetic body such as one comprising cobalt, nickel, or the like, alone or in combination or in addition to iron.

Further, the locking rod 6 is made of iron; however, the structure is not, of course, limited to this, and the other members can be selected in correspondence to cost, strength or the like.

## Claims

1. Steering lock apparatus comprising:
a hollow casing (2);
a key cylinder (3) received within the casing (2);
an ignition switch (7) operatively connected to the key cylinder (3); and
a locking rod (6) operatively connected to the key cylinder (3), the locking rod (6) having a base portion (61) received within the casing (2) and being movable to a locking position in which an engaging portion (62) of the locking rod (6) protrudes from the casing (2) so as to be engageable with a steering shaft and an unlocking position in which the engaging portion (62) is withdrawn for disengagement from the steering shaft;
the casing (2) having an opening portion (26);
the locking rod (6) being magnetic and being withdrawable from the locking position to the unlocking position by the application of a magnet to the opening portion (26) of the casing (2); and
a cap (9) closing the opening portion (26) of the casing (2), the cap (9) being made of a ferromagnetic material and having a main body portion (91) and a peripheral wall portion (92) covering a peripheral edge of the opening portion (26) of the casing to disperse the magnetic field of a magnet applied to the cap in an attempt to withdraw the locking rod from engagement with the steering shaft.

2. Steering lock apparatus as claimed in claim 1, wherein an endless uneven bead (91a) is formed in a center portion of the cap (9).

3. Steering lock apparatus as claimed in claim 1 or 2, wherein the casing (2) has a cover portion (26b) covering a free end of the peripheral wall portion (92) of the cap (9).

4. Steering lock apparatus as claimed in any preceding claim, wherein a free end of the peripheral wall portion (92) of the cap (9) is supported relative to the casing (2) by a fixing portion (28).

5. Steering lock apparatus as claimed in claim 4, wherein the fixing portion (28) is arranged at a position such that it is hard to be contacted with the cap at the time of mounting the casing on a vehicle and easy to be contacted with the cap in the casing itself.

6. Steering lock apparatus as claimed in claim 3 and claim 4 or 5, wherein a notch portion (27) is formed in the cover portion (26b) of the casing (2) and the fixing portion (28) is provided in correspondence to the notch portion (27).

7. Steering lock apparatus as claimed in any preceding claim, wherein the cap (9) comprises iron and/or cobalt and/or nickel.

## Patentansprüche

1. Lenkradschlossvorrichtung, die folgendes umfasst:
ein hohles Gehäuse (2),
einen Schlüsselzylinder (3), der innerhalb des Gehäuses (2) aufgenommen wird,
einen Zündschalter (7), der wirksam mit dem Schlüsselzylinder (3) verbunden ist, und
eine Verriegelungsstange (6), die wirksam mit dem Schlüsselzylinder (3) verbunden ist, wobei die Verriegelungsstange (6) einen Basisabschnitt (61) hat, der innerhalb des Gehäuses (2) aufgenommen wird und bewegt werden kann zu einer Verriegelungsposition, in der ein Eingriffsabschnitt (62) der Verriegelungsstange (6) von dem Gehäuse (2) vorspringt, um so mit einer Lenkwelle in Eingriff gebracht werden zu können, und einer Entriegelungsposition, in welcher der Eingriffsabschnitt (62) für ein Lösen von der Lenkwelle zurückgezogen ist,
wobei das Gehäuse (2) einen Öffnungsabschnitt (26) hat,
wobei die Verriegelungsstange (6) magnetisch ist und durch das Anlegen eines Magneten an den Öffnungsabschnitt (26) des Gehäuses (2) von der Verriegelungsposition zur Entriegelungsposition zurückgezogen werden kann, und
eine Kappe (9), die den Öffnungsabschnitt (26) des Gehäuses (2) verschließt, wobei die Kappe (9) aus einem ferromagnetischen Material hergestellt ist und einen Hauptkörperabschnitt (91) und einen umlaufenden Wandabschnitt (92) hat, der eine umlaufende Kante des Öffnungsabschnitt (26) des Gehäuses abdeckt, um bei einem Versuch, die Verriegelungsstange aus dem Eingriff mit der Lenkwelle zurückzuziehen, das Magnetfeld eines an die Kappe angelegten Magneten zerstreut.

2. Lenkradschlossvorrichtung nach Anspruch 1, wobei in einem Mittelabschnitt der Kappe (9) eine endlose ungleichmäßige Wulst (91 a) geformt ist.

3. Lenkradschlossvorrichtung nach Anspruch 1 oder 2, wobei das Gehäuse (2) einen Abdeckungsabschnitt (26b) hat, der ein freies Ende des umlaufenden Wandabschnitts (92) der Kappe (9) abdeckt.

4. Lenkradschlossvorrichtung nach einem der vorhergehenden Ansprüche, wobei ein freies Ende des umlaufenden Wandabschnitts (92) der Kappe (9) durch einen Befestigungsabschnitt (28) im Verhältnis zum Gehäuse (2) getragen wird.

5. Lenkradschlossvorrichtung nach Anspruch 4, wobei der Befestigungsabschnitt (28) an einer Position angeordnet ist derart, dass er zum Zeitpunkt des Anbringens des Gehäuses an einem Fahrzeug schwer in Berührung mit der Kappe zu bringen und im Gehäuse selbst leicht in Berührung mit der Kappe zu bringen ist.

6. Lenkradschlossvorrichtung nach Anspruch 3 und 4 oder 5, wobei im Abdeckungsabschnitt (26b) des Gehäuses (2) ein Kerbenabschnitt (27) geformt ist und der Befestigungsabschnitt (28) in Entsprechung zu dem Kerbenabschnitt (27) bereitgestellt wird.

7. Lenkradschlossvorrichtung nach einem der vorhergehenden Ansprüche, wobei die Kappe (9) Eisen und/oder Kobalt und/oder Nickel umfasst.

## Revendications

1. Verrou de direction, comprenant:
un boîtier creux (2);
un barillet de serrure (3) reçu dans le boîtier (2);
un contacteur d'allumage (7) connecté en service au barillet de serrure (3); et
une tige de verrouillage (6) connectée en service au barillet de serrure (3), la tige de verrouillage (6) comportant une partie de base (61) reçue dans le boîtier (2) et pouvant être déplacée vers une position de verrouillage, dans laquelle une partie d'engagement (62) de la tige de verrouillage (6) déborde du boîtier (2), de sorte à pouvoir être engagée dans un arbre de direction, et une position de déverrouillage, dans laquelle la partie d'engagement (62) est retirée en vue d'un dégagement de l'arbre de direction;
le boîtier (2) comportant une partie d'ouverture (26);
la tige de verrouillage (6) étant magnétique et pouvant être déplacée de la position de verrouillage vers la position de déverrouillage par suite de l'application d'un aimant sur la partie d'ouverture (26) du boîtier (2); et
un capuchon (9) fermant la partie d'ouverture (26) du boîtier (2), le capuchon (9) étant composé d'un matériau ferromagnétique et comportant une partie de corps principale (91) et une partie de paroi périphérique (92) recouvrant un bord périphérique de la partie d'ouverture (26) du boîtier afin de disperser le champ magnétique d'un aimant appliqué sur le capuchon lors d'un essai tendant à dégager la tige de verrouillage de l'arbre de direction.

2. Verrou de direction selon la revendication 1, dans lequel une nervure irrégulière continue (91a) est formée dans une partie centrale du capuchon (9).

3. Verrou de direction selon les revendications 1 ou 2, dans lequel le boîtier (2) comporte une partie de couverture (26b) recouvrant une extrémité libre de la partie de paroi périphérique (92) du capuchon (9).

4. Verrou de direction selon l'une quelconque des revendications précédentes, dans lequel une extrémité libre de la partie de paroi périphérique (92) du capuchon (9) est supportée sur le boîtier (2) par une partie de fixation (28).

5. Verrou de direction selon la revendication 4, dans lequel la partie de fixation (28) est agencée au niveau d'une position telle qu'il est difficile d'être contactée par le capuchon lors du montage du boîtier sur un véhicule et facile d'être contactée par le capuchon dans le boîtier même.

6. Verrou de direction selon la revendication 3 et la revendication 4 ou 5, dans lequel une partie d'encoche (27) est formée dans la partie de couverture (26b) du boîtier (2), la partie de fixation (28) étant agencée de manière correspondante sur la partie d'encoche (27).

7. Verrou de direction selon l'une quelconque des revendications précédentes, dans lequel le capuchon (9) comprend du fer et/ou du cobalt et/ou du nickel.
